# EUROPÄISCHE PATENTSCHRIFT

(11) **EP 4 191 120 B1**
(45) Veröffentlichungstag und Bekanntmachung des Hinweises auf die Patenterteilung: **04.06.2025**
(21) Anmeldenummer: 22210785.6
(22) Anmeldetag: 01.12.2022
(51) Int. Cl.: F17C 3/08

(54) **KRYOGEN-SPEICHERSYSTEM**
CRYOGENIC STORAGE SYSTEM
SYSTÈME DE STOCKAGE CRYOGÉNIQUE

(30) Priorität: 01.12.2021 DE 102021213644
(43) Veröffentlichungstag der Anmeldung: 07.06.2023
(73) Patentinhaber: MAGNA STEYR Fahrzeugtechnik GmbH & Co KG, 8041 Graz (AT)
(72) Erfinder: HAMMER, Daniel, 8053 Graz (AT); STUBENRAUCH, Martin, 8142 Wundschuh (AT)
(74) Vertreter: Zangger, Bernd

(56) Entgegenhaltungen:
- WO-A1-2022/106053
- DE-B3- 102020 206 689
- US-A1- 2007 193 275

## Beschreibung

### Gebiet der Erfindung

Die vorliegende Erfindung betrifft ein Speichersystem zur Speicherung eines kryogenen Mediums, insbesondere zur Speicherung von Wasserstoff. Die Erfindung betrifft auch eine Vorrichtung umfassend ein solches Speichersystem und einen Verbraucher für das im Speicherbehälter des Speichersystems aufgenommene Medium.

### Stand der Technik

Es ist bekannt, dass kryogene Medien, also tiefkalte und zumindest teilweise flüssige Medien, wie Wasserstoff oder Helium, in einem Speicherbehälter aufbewahrt werden können, um Energie, beispielsweise zum Antrieb eines Fahrzeugs, eines Schiffes, eines Flugzeugs oder einer Rakete zu transportieren. Das Medium liegt dabei üblicherweise teilweise in flüssiger Form im Speicherbehälter vor und teilweise auch in Gasform.

Bei bekannten kryogenen Speichersystemen sind verschiedenste Leitungen als Verbindung zwischen dem Innentank und der äußeren Umgebung des Speichersystems angeordnet. Diese sind für verschiedene Zwecke erforderlich, wie z.B. zum Leiten von kryogenem flüssigem Medium vom Innentank zum Wärmetauscher oder Verdampfer bis hin zu einem Verbraucher. Manchmal haben solche Speichersysteme auch ein Druckaufbausystem, je nach Type, ein offenes oder geschlossenes System. Ein Druckaufbausystem kann den bei der gasförmigen oder flüssigen Entnahme von beispielsweise Wasserstoff entstehenden Druckabfall ausgleichen. Dies wird in der Regel entweder durch einen Innentankwärmetauscher (geschlossenes Rohrleitungssystem) oder durch direkte Verdampfung (offenes System) gewährleistet.

Es gibt in bekannten kryogenen Speichersystemen einen Entnahmestrang, welcher eine Verbindung vom Inneren des Tanks bis zu einem Verbraucher darstellt. Bei einem Fehler einer Komponente in diesem Entnahmestrang kommt es üblicherweise zu einem Ausfall (Abschaltung) des Systems, da die Zuführung des Mediums vom Innentank bis zum Verbraucher nicht mehr möglich ist.

Aus der US 2007 193 275 A1 ist eine Motoreinheit, insbesondere für den städtischen Verkehr, bekannt, umfassend einen Motor, der mit einem komprimierten Gas versorgt wird und eine Expansionskammer aufweist, die mit einem Kolben versehen ist, der so angeordnet ist, dass er bei jedem Doppelhub zyklisch einen Arbeits- und einen Ausstoßhub ausführt; einen Flüssiggastank, der mit dem Motor in Verbindung steht; und Mittel zur Vergasung des Flüssiggases, die zwischen dem Flüssiggastank und dem Motor angeordnet sind, um komprimiertes Gas zu erhalten, wobei die Vergasungsmittel eine Vergasungskammer in Verbindung mit dem Flüssiggastank und einen Flüssigbrennstofftank umfassen, der mit der Vergasungskammer verbunden ist, wobei die Vergasungskammer sowohl mit dem Flüssigtreibstofftank für die Verbrennung des Flüssigtreibstoffs mit dem Sauerstoff des Flüssiggases als auch mit der Expansionskammer in Fluidverbindung steht, so dass ein Gasgemisch, das komprimiertes Flüssiggas und gasförmige Produkte des Verbrennungsprozesses umfasst, zur Verrichtung nützlicher Arbeit verwendet wird.

### Zusammenfassung der Erfindung

Es ist eine Aufgabe der Erfindung, ein Speichersystem zur Speicherung eines kryogenen Mediums und eine Vorrichtung umfassend ein solches Speichersystem und einen Verbraucher für das im Speicherbehälter des Speichersystems aufgenommene Medium, anzugeben, dass fehlertolerant ist, wobei es insbesondere bei einem Ausfall einer einzelnen Komponente eines Entnahmestrangs zu keinem Totalausfall der Versorgung eines Verbrauchers aus dem Speichersystem kommen soll.

Die Lösung der Aufgabe erfolgt durch ein Speichersystem zur Speicherung eines kryogenen Mediums, insbesondere zur Speicherung von Wasserstoff, gemäß Anspruch 1.

Das Speichersystem umfasst einen Speicherbehälter zur Aufnahme des Mediums, wobei ein erster Entnahmestrang eine fluidleitende Verbindung vom Innenraum des Speicherbehälters bis zu einem Verbraucheranschluss, zum Anschluss eines Verbrauchers, bildet, wobei in dem ersten Entnahmestrang zumindest ein erstes steuerbares Leitungs-Absperrventil und ein erster Wärmetauscher angeordnet ist, wobei ein vom ersten Entnahmestrang verschiedener zweiter Entnahmestrang eine fluidleitende Verbindung vom Innenraum des Speicherbehälters bis zu einem Verbraucheranschluss, zum Anschluss des selben Verbrauchers, bildet, wobei in dem zweiten Entnahmestrang zumindest ein zweites steuerbares Leitungs-Absperrventil und ein weiterer erster Wärmetauscher angeordnet ist.

Erfindungsgemäß weist der erste Entnahmestrang zusätzlich einen Innentank-Wärmetauscher nach dem ersten Wärmetauscher auf und der zweite Entnahmestrang weist zusätzlich einen weiteren Innentank-Wärmetauscher nach dem weiteren ersten Wärmetauscher auf. Der Innentank-Wärmetauscher in jedem Entnahmestrang dient dazu, den Druck im Inneren des Speicherbehälters mittels des erwärmten entnommenen Mediums zu steuern oder zu regulieren.

Erfindungsgemäß umfasst der Entnahmestrang eines Speichersystems ein steuerbares Leitungs-Absperrventil um die Entnahme des Mediums aus dem Speicherbehälter in den Entnahmestrang zu steuern und stromabwärts dieses Leitungs-Absperrventils einen ersten Wärmetauscher, der dazu dient das entnommene Medium, insbesondere Wasserstoff, auf die gewünschten Entnahmebedingungen zu temperieren, insbesondere zu erwärmen und eventuell, falls flüssiges Medium entnommen wurde, auch zu verdampfen. Erfindungsgemäß wird ein solcher Entnahmestrang, vom Innenbehälter bis zu einem Verbraucher, redundant zweimal - oder auch öfter- ausgebildet. Daher gibt es erfindungsgemäß einen ersten Entnahmestrang und eine davon verschiedenen zweiten Entnahmestrang, wobei jeder der Entnahmestränge über gleichartige Komponenten verfügt, so dass die Entnahmestränge die selbe Funktion übernehmen können. Insbesondere weist sowohl der erste als auch der zweite Entnahmestrang ein dazugehörendes Leitungs-Absperrventil auf, um den Zufluss in den Entnahmestrang zu steuern, sowie einen zugeordneten Wärmetauscher, um das Medium auf die gewünschten Entnahmebedingungen zu temperieren.

Bei üblichen kryogenen Speichersystemen ist die Anzahl, sowie die Art der Verrohrung aus thermodynamischen Gründen auf ein Minimum beschränkt. Erfindungsgemäß wird, dem entgegengesetzt, eine höhere Anzahl von Komponenten verwendet.

Einzelfehler von Komponenten führen daher nicht mehr zu einem Totalausfall (Abschaltung) des Systems, da die Komponenten und die Verbindung zu dem Verbraucher nicht blos einfach mit dem Innentank in Verbindung sind, sondern redundant ausgeführt sind.

Der erste und zweite Entnahmestrang können beispielsweis beide dazu eingerichtet sein, gasförmiges Medium aus dem Speicherbehälter zu entnehmen oder beide dazu eingerichtet sein, flüssiges Medium aus dem Speicherbehälter zu entnehmen. Es kann auch beispielsweise der erste Entnahmestrang dazu eingerichtet sein, gasförmiges Medium aus dem Speicherbehälter zu entnehmen und der zweite Entnahmestrang dazu eingerichtet sein, flüssiges Medium aus dem Speicherbehälter zu entnehmen.

Gemäß einer Ausführungsform sind der Verbraucheranschluss des ersten Entnahmestrangs und der Verbraucheranschluss des zweiten Entnahmestrangs zu einem gemeinsamen Anschluss zusammengeführt. In einer alternativen Ausführungsform sind die beiden Verbraucheranschlüsse nicht zu einem gemeinsamen Anschluss zusammengeführt. Die beiden Verbraucheranschlüsse können somit einen gemeinsamen oder zwei separate Anschlüsse am selben Verbraucher bilden.

Bevorzugt weist der erste Entnahmestrang zusätzlich ein drittes steuerbares Leitungs-Absperrventil unmittelbar vor dem Verbraucheranschluss auf und weist der zweite Entnahmestrang zusätzlich ein weiteres drittes steuerbares Leitungs-Absperrventil unmittelbar vor dem Verbraucheranschluss auf. Das dritte steuerbare Leitungs-Absperrventil kann als Absperreinrichtung vor dem angeschlossenen Verbraucher dienen.

Bevorzugt weist der erste Entnahmestrang zusätzlich einen zweiten Wärmetauscher nach dem Innentank-Wärmetauscher auf und der zweite Entnahmestrang weist zusätzlich einen weiteren zweiten Wärmetauscher nach dem weiteren Innentank-Wärmetauscher auf. Durch die zweiten Wärmetauscher kann auch nach der Wärme-Übertragung durch den Innentank-Wärmetauscher des jeweiligen Entnahmestrangs die Einhaltung der gewünschten Entnahmebedingungen für das Medium sicher gestellt werden.

Vorzugsweise weist der erste Entnahmestrang zusätzlich ein Teilstromregelventil nach dem ersten steuerbaren Leitungs-Absperrventil und vor dem Innentank-Wärmetauscher auf und weist der zweite Entnahmestrang zusätzlich einen ein weiteres Teilstromregelventil nach dem zweiten steuerbaren Leitungs-Absperrventil und vor dem weiteren Innentank-Wärmetauscher auf. Über die Teilstromregelventile kann wahlweise nur ein Teil des entnommenen und erwärmten Mediums in den Speicherbehälter, zum jeweiligen Innentank-Wärmetauscher zurückgeführt werden.

Generell können in einem erfindungsgemäßen Speichersystem alle Komponenten des ersten Entnahmestrangs bis zum Verbraucheranschluss, wie Leitungen, Wärmetauscher und Ventile, redundant auch im zweiten Entnahmestrang vorhanden und in der selben Reihenfolge angeordnet sein.

Bevorzugt ist der Speicherbehälter doppelwandig ausgebildet, mit einem isolierenden Vakuumraum zwischen den beiden Wänden des Speicherbehälters. Gemäß einer Ausführungsform sind das erste und zweite steuerbare Leitungs-Absperrventil und/oder die beiden ersten Wärmetauscher des ersten und zweiten Entnahmestrangs im Vakuumraum angeordnet, besonders bevorzugt auch die zweiten Wärmetauscher des ersten und zweiten Entnahmestrangs.

Gemäß einer anderen Ausführungsform sind das erste und zweite steuerbare Leitungs-Absperrventil und/oder die ersten Wärmetauscher des ersten und zweiten Entnahmestrangs außerhalb eines Außenbehälters des Speicherbehälters angeordnet, wobei zumindest Teile von Leitungen außerhalb eines Außenbehälters des Speicherbehälters als vakuum-isolierte Leitungen ausgebildet sind.

Der Speicherbehälter kann auch zumindest einen sekundären Vakuumraum oder Raum mit Inertgasatmosphäre umfassen - insbesondere zusätzlich zu einem Vakuumraum zwischen der Innen- und Außenwand des Behälters -, wobei das erste und zweite steuerbare Leitungs-Absperrventil und/oder die ersten Wärmetauscher des ersten und zweiten Entnahmestrangs - sowie bevorzugt alle Komponenten des ersten und zweiten Entnahmestrangs - im sekundären Vakuumraum oder Raum mit Inertgasatmosphäre angeordnet sind. Besonders bevorzugt sind die Komponenten für den ersten und zweiten Entnahmestrang jeweils in einem separaten sekundären Vakuumbereich oder Raum mit Inertgasatmosphäre, also jeweils zugeordnet zum ersten bzw. zweiten Entnahmestrang, angeordnet, so dass jeder Entnahmestrang seinen eigenen sekundären Vakuumraum oder Raum mit Inertgasatmosphäre besitzt.

Die Lösung der Aufgabe erfolgt auch durch eine Vorrichtung umfassend ein Speichersystem, wie zuvor beschrieben, und einen Verbraucher für das im Speicherbehälter aufgenommene Medium, wobei der Verbraucheranschluss des ersten Entnahmestrangs und der Verbraucheranschluss des zweiten Entnahmestrangs an den Verbraucher angeschlossen ist. Dabei kann der Verbraucheranschluss des ersten Entnahmestrangs und der Verbraucheranschluss des zweiten Entnahmestrangs zu einem gemeinsamen Anschluss am Verbraucher zusammengeführt sein oder stattdessen nicht zu einem gemeinsamen Anschluss am Verbraucher zusammengeführt sein, also zwei getrennte Anschlüsse am Verbraucher bilden.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Speichersystems.
- Fig. 2: ist eine schematische Darstellung eines erfindungsgemäßen Speichersystems in einer alternativen Ausführungsform.
- Fig. 3: ist eine schematische Darstellung eines erfindungsgemäßen Speichersystems in einer alternativen Ausführungsform.
- Fig. 4: ist eine schematische Darstellung eines erfindungsgemäßen Speichersystems in einer alternativen Ausführungsform.
- Fig. 5: ist eine schematische Darstellung eines erfindungsgemäßen Speichersystems in einer alternativen Ausführungsform.
- Fig. 6: ist eine schematische Darstellung eines erfindungsgemäßen Speichersystems in einer alternativen Ausführungsform.
- Fig. 7: ist eine schematische Darstellung eines erfindungsgemäßen Speichersystems in einer alternativen Ausführungsform.
- Fig. 8: ist eine schematische Darstellung eines erfindungsgemäßen Speichersystems in einer alternativen Ausführungsform.
- Fig. 9: ist eine schematische Darstellung eines erfindungsgemäßen Speichersystems in einer alternativen Ausführungsform.
- Fig. 10: ist eine schematische Darstellung eines erfindungsgemäßen Speichersystems in einer alternativen Ausführungsform.

### Detaillierte Beschreibung der Erfindung

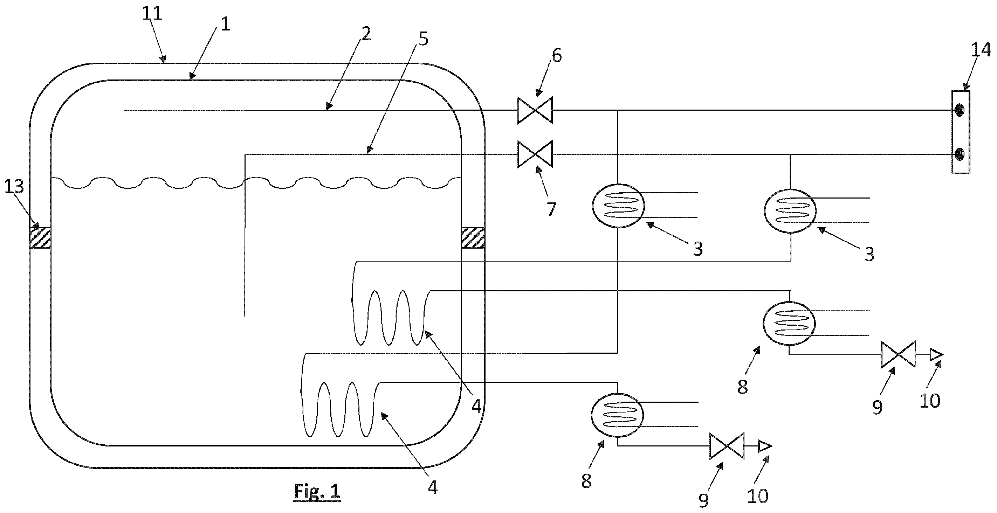

In der Fig.1 ist ein erfindungsgemäßes Speichersystem zur Speicherung eines kryogenen Mediums, insbesondere zur Speicherung von Wasserstoff, dargestellt.

Das Speichersystem umfasst einen Speicherbehälter 1 zur Aufnahme des Mediums. Der Speicherbehälter 1 bildet einen Innenbehälter eines doppelwandigen Behälters, der zusätzlich einen Außenbehälter 11 umfasst. Zwischen Außenbehälter 11 und Innenbehälter, also Speicherbehälter 1, ist ein Vakuum gebildet. Zwischen Außenbehälter 11 und Innenbehälter sind zudem abschnittsweise Aufhängungen 13 angeordnet, um die beiden Schalen des doppelwandigen Behälters zueinander zu positionieren.

Das kryogene Medium, insbesondere Wasserstoff, befindet sich im unteren Bereich des Speicherbehälters 1, nämlich unterhalb der in den Fig. als Wellenlinie dargestellten Flüssigkeitsoberfläche als Flüssigkeit im Behälter, oberhalb der wellenförmigen Flüssigkeitsoberfläche in gasförmigem Zustand.

Eine Gasentnahmeleitung 2 ist zur Entnahme des gasförmigen Mediums aus dem Speicherbehälter 1 eingerichtet, so dass das freie Ende der Gasentnahmeleitung 2 oberhalb der Flüssigkeitsoberfläche, in der Nähe der Decke des Speicherbehälters 1, im Speicherbehälter 1 endet. Mit der Gasentnahmeleitung 2 beginnt der erste Entnahmestrang.

Eine Flüssigentnahmeleitung 5 ist zur Entnahme des flüssigen Mediums aus dem Speicherbehälter 1 eingerichtet, so dass das freie Ende der Flüssigentnahmeleitung 5 unterhalb der Flüssigkeitsoberfläche, in der Nähe des Bodens des Speicherbehälters 1, im Speicherbehälter 1 endet. Mit der Flüssigentnahmeleitung 5 beginnt der zweite Entnahmestrang.

Die Begriffe "Decken" und "Boden" beziehen sich dabei auf die übliche Einbaulage des Speicherbehälters, beispielsweise in einer fahrenden, schwimmenden oder fliegenden Transportvorrichtung, wobei die Gravitation in einem Normalbetrieb der Transportvorrichtung in Richtung zum Boden des Speicherbehälters wirkt.

In der Gasentnahmeleitung 2 ist ein erstes steuerbares Leitungs-Absperrventil 6 angeordnet und in der Flüssigentnahmeleitung 5 ist ein zweites steuerbares Leitungs-Absperrventil 7 angeordnet. Beide Leitungs-Absperrventile befinden sich außerhalb des Speicherbehälters 1. In der Fig. 1 befinden sich die Leitungs-Absperrventile auch außerhalb des Außenbehälters 11.

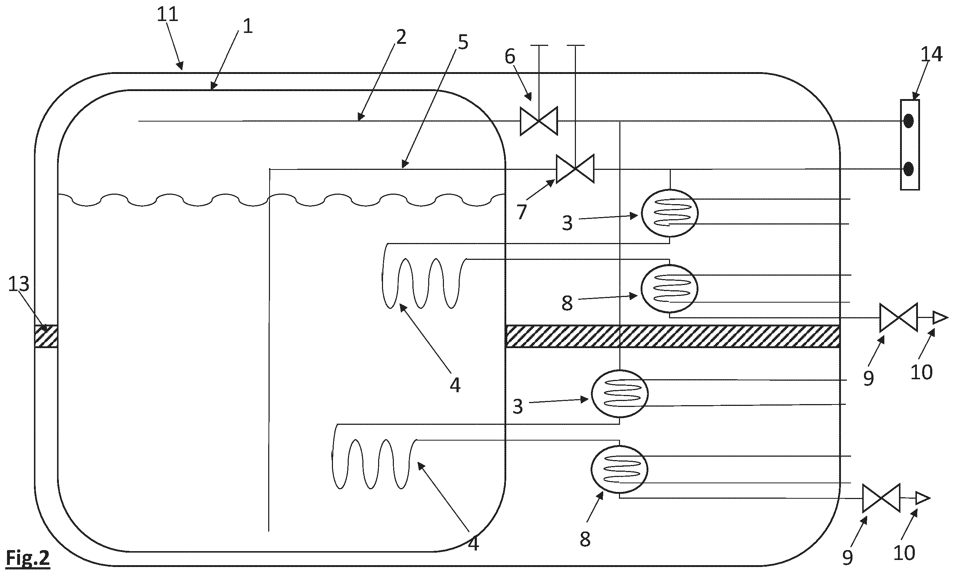

In der alternativen Ausführung des Speichersystems die in Fig. 2 dargestellt ist, sind die beiden Leitungs-Absperrventile 6, 7 innerhalb des Außenbehälters 11 angeordnet, also zwischen dem Innenbehälter, Speicherbehälter 1, und dem Außenbehälter 11 des doppelwandigen Speicherbehälters, nämlich im Vakuumraum.

Die Leitungs-Absperrventile sind durch eine Steuervorrichtung, die ebenfalls im Vakuumraum (Fig.2) oder außerhalb des gesamten Behälters (Fig. 1) angeordnet sein kann, steuerbar. Dabei kann die Strömung durch die Leitungs-Absperrventile bevorzugt nicht nur unterbrochen werden oder freigegeben werden, sondern auch reduziert werden.

Über die Gasentnahmeleitung 2 und/oder die Flüssigentnahmeleitung 5, bevorzugt auch über das erste Leitungs-Absperrventil 6 und/oder das zweite Leitungs-Absperrventil 7, kann auch eine Betankung des Speicherbehälters 1 aus einer Betankungsvorrichtung 14 erfolgen.

Die Gasentnahmeleitung 2 und die Flüssigentnahmeleitung 5 verlaufen auch nach den beiden Leitungs-Absperrventilen 6, 7 als zwei getrennte Leitungen, mit ihren jeweils eigenen, zugeordneten Komponenten, und bilden daher zwei getrennte Entnahmestränge.

Die Gasentnahmeleitung 2 und die Flüssigentnahmeleitung 5 sind als getrennte Entnahmestränge mit dem jeweils zugeordneten, außerhalb des Speicherbehälters 1, beispielsweise zwischen Speicherbehälter 1 und Außenbehälter 11 des doppelwandigen Speicherbehälters (Fig. 2), angeordneten, ersten Wärmetauscher 3 zur Erwärmung des entnommenen Mediums strömungsverbundenen.

Stromabwärts des ersten Wärmetauschers 3 ist innerhalb des Speicherbehälters 1 jeweils ein Innentank-Wärmetauscher 4 zur Erwärmung des flüssigen Mediums im Speicherbehälter 1 angeordnet, der vom erwärmten, aus dem Speicherbehälter 1 entnommenen Medium durchflossen wird. Durch die Erwärmung am Innentank-Wärmetauscher 4 wird das flüssige Medium im Speicherbehälter 1 teilweise erwärmt und verdampft.

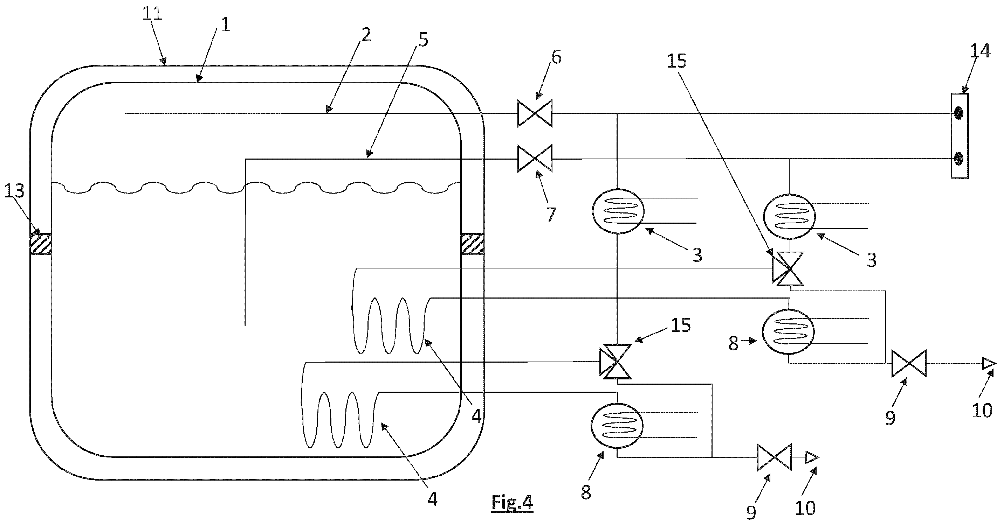

In der Gasentnahmeleitung 2 und in der Flüssigentnahmeleitung 5 der Ausführung gemäß Fig. 1 bis Fig. 3 ist kein steuerbares Dreiwegeventil, also kein Teilstromventil 15 angeordnet, so dass das gesamte durch die Gasentnahmeleitung 2 und/oder durch die Flüssigentnahmeleitung 5 entnommene und vom ersten Wärmetauscher 3 erwärmte Medium zum Innentank-Wärmetauscher 4 gelangt. In den Ausführungen gemäß Fig. 4 bis Fig. 4 ist in jedem Entnahmestrang ein Teilstromventil 15 angeordnet, so dass wahlweise lediglich ein Teil des durch die Gasentnahmeleitung 2 und/oder durch die Flüssigentnahmeleitung 5 entnommenen und vom ersten Wärmetauscher 3 erwärmten Mediums zum jeweiligen Innentank-Wärmetauscher 4 gelangt.

Stromabwärts des jeweiligen Innentank-Wärmetauschers 4 und außerhalb des Speicherbehälters 1, außerhalb (Fig. 1) oder innerhalb (Fig. 2) des Außenbehälters 11 des doppelwandigen Behälters, ist jeweils ein zweiter Wärmetauscher 8 zur Erwärmung des Mediums im ersten Entnahmestrang und im zweiten Entnahmestrang angeordnet.

Das über den ersten und/oder zweiten Entnahmestrang strömende Medium wird stromabwärts des jeweiligen Innentank-Wärmetauschers 4 einem selben Verbraucher über einen jeweiligen Verbraucheranschluss 10 zugeführt, insbesondere einer Brennstoffzelle als Verbraucher. Zwischen dem zweiten Wärmetauscher 8 und dem Verbraucher 10 ist in jedem Entnahmestrang ein drittes Leitungs-Absperrventil 9 angeordnet.

Die Ausführungsform der Fig. 2 unterscheidet sich dadurch von der Fig. 1, dass steuerungsrelevante Komponenten beider Entnahmestränge des Speichersystems, wie die ersten Wärmetauscher 3, die zweiten Wärmetauscher 8, das erste Leitungs-Absperrventil 6 und das zweite Leitungs-Absperrventil 8, innerhalb des Außenbehälters 11 angeordnet sind, nicht außerhalb des Außenbehälters 11 wie in Fig. 1, und somit im Zwischenraum des doppelwandigen Behälters angeordnet sind, der einen Vakuumraum bildet.

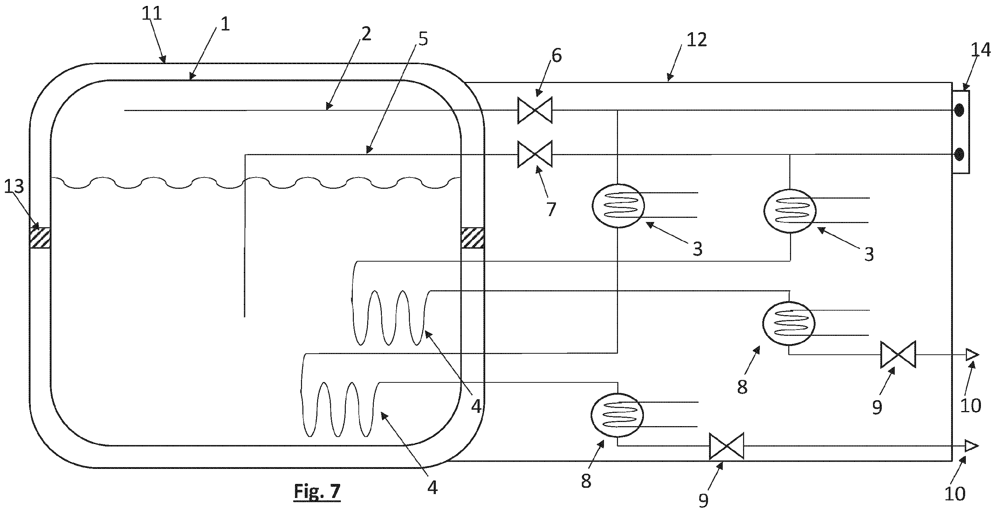

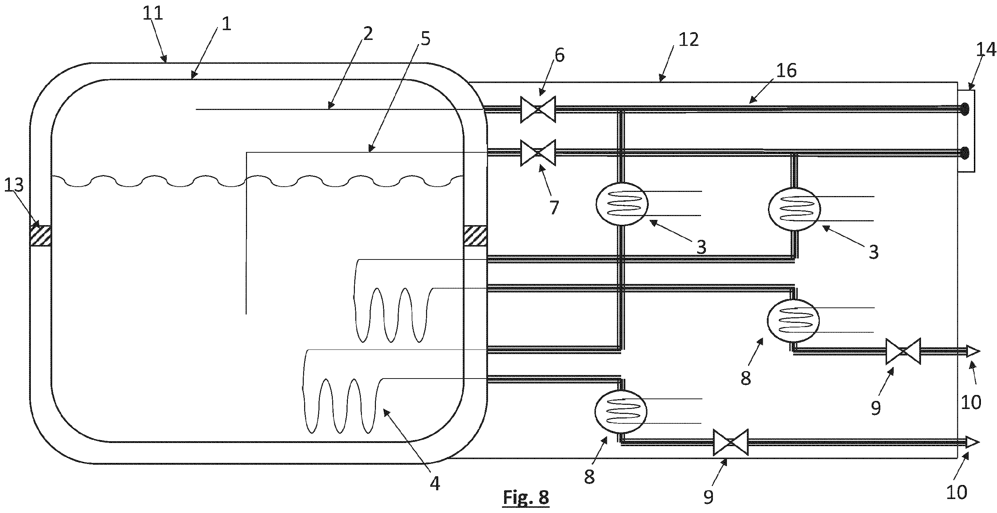

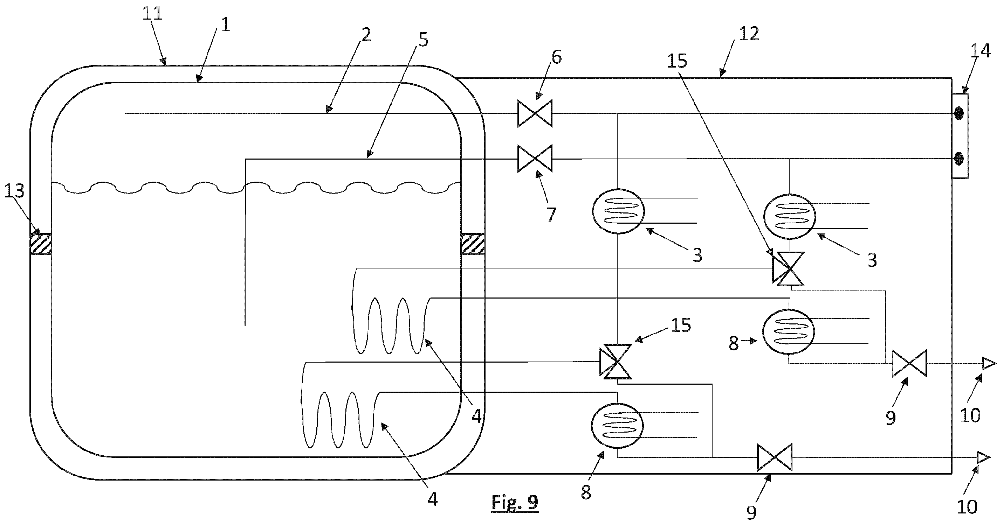

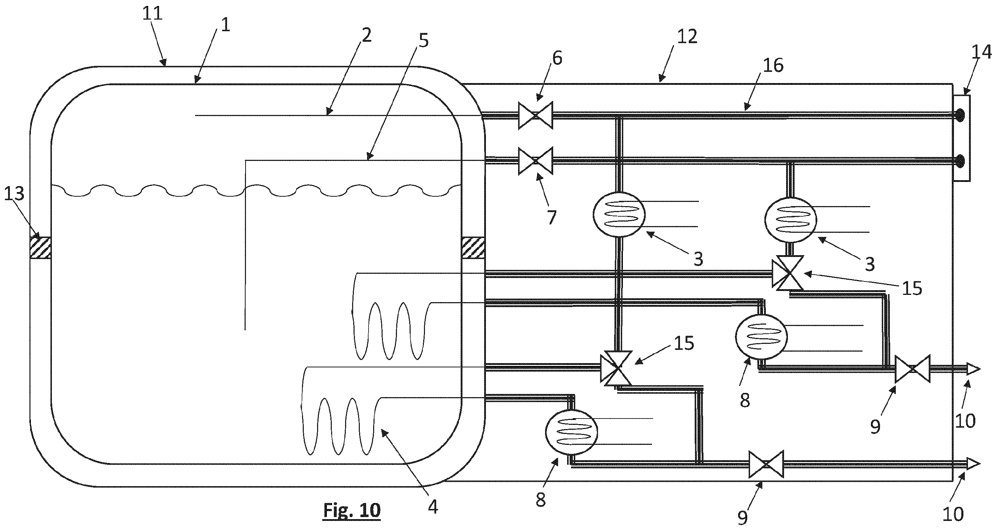

Dabei können zwei getrennte Bereiche des Vakuumraumes ausschließlich für die Wärmetauscher 3, 8 des ersten Entnahmestrangs und für die Wärmetauscher 3, 8 des zweiten Entnahmestrangs verwendet werden. Hierdurch können Fehler in einem Entnahmestrang auf einfachere Weise entdeckt und dem betreffenden Entnahmestrang zugewiesen werden. Die Trennung der beiden Bereiche des Vakuumraumes kann durch die Aufhängungen 13 erfolgen. Die Trennung kann aber auch durch mindestens einen zusätzlichen sekundären Vakuumraum 12 erfolgen. Auch können alle Komponenten beider Entnahmestränge in einem zusätzlichen sekundären Vakuumraum 12 verbaut sein, um im Falle eines Fehlers das zwischen Speicherbehälter 1 und Außenbehälter 11 befindliche primäre Vakuum nicht zu zerstören und damit den gesamten Inhalt des Speicherbehälters 1 über die Sicherheitseinrichtung zu entleeren (Fig. 7 - 10). Anstelle des sekundären Vakuums 12 kann auch eine Inertgasatmosphäre (z.B. Helium, Stickstoff, Argon) im Raum 12 hergestellt werden.

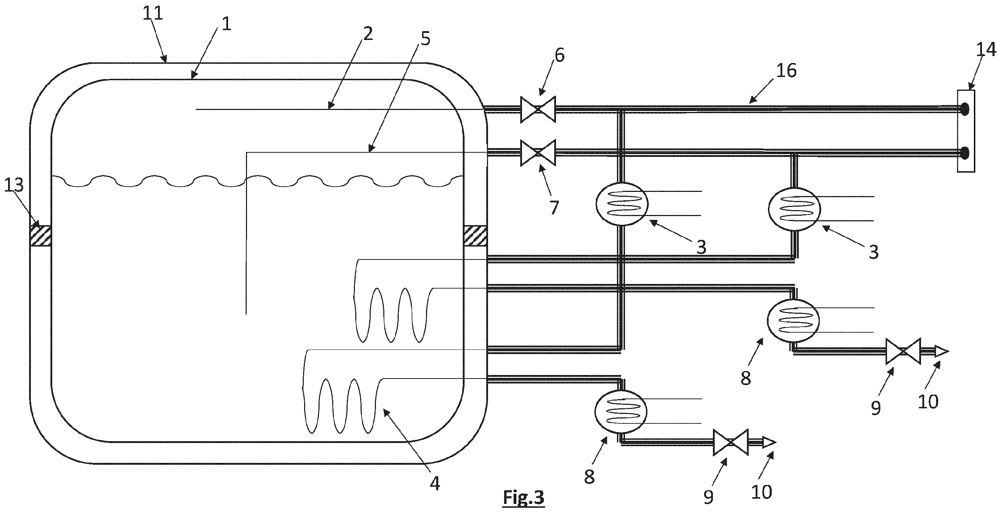

In der Ausführung der Fig. 3 sind die außerhalb des Speicherbehälters verlaufenden Leitungen zwischen den Komponenten des jeweiligen Entnahmestrangs als vakuum-isolierte Leitungen 16 ausgebildet.

Somit können insgesamt die kryogenen Ventile 6 und 7, sowie die Wärmetauscher 3 und 8, als auch die Absperreinrichtungen 9 außerhalb des Tanksystems positioniert werden (Fig. 1). Beispielsweise bei kryogenen Speichersystemen, wo dies nicht einfach technisch realisiert werden kann aufgrund der sehr tiefen Temperaturen und damit verbundenen Eisbildungen oder anderen sicherheitsrelevanten Gegebenheiten, kann man diese Komponenten innerhalb des Vakuumbereichs (Fig.2) platzieren und nur die Komponenten außerhalb platzieren, die für die Absperrung notwendig sind. Als alternative, um beispielsweise den Bauraum besser nutzen zu können, weil keine Komponenten zwischen Innentank 1 und Au-ßentank 11 platziert werden müssen, können die kryogenführenden Leitungen und Bauteile mittels vakuum-isolierten Leitungen 16 (Vacuum inuslated Lines) verbunden werden, um ein Auftreten von kryogenen Temperaturen oder anderen sicherheitsrelevanten Problemen zu minimieren oder abzustellen (Fig.3). Zumindest sind vorzugsweise bis zu den ersten Wärmetauschern 3 vakuumisolierte Leitungen zu verwenden, um Eisbildung oder Luftverflüssigung zu vermeiden.

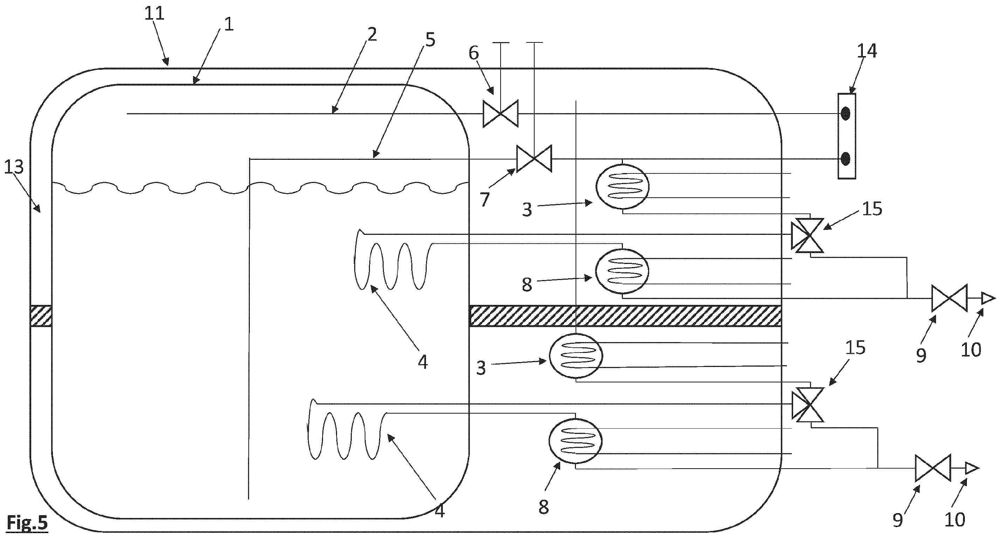

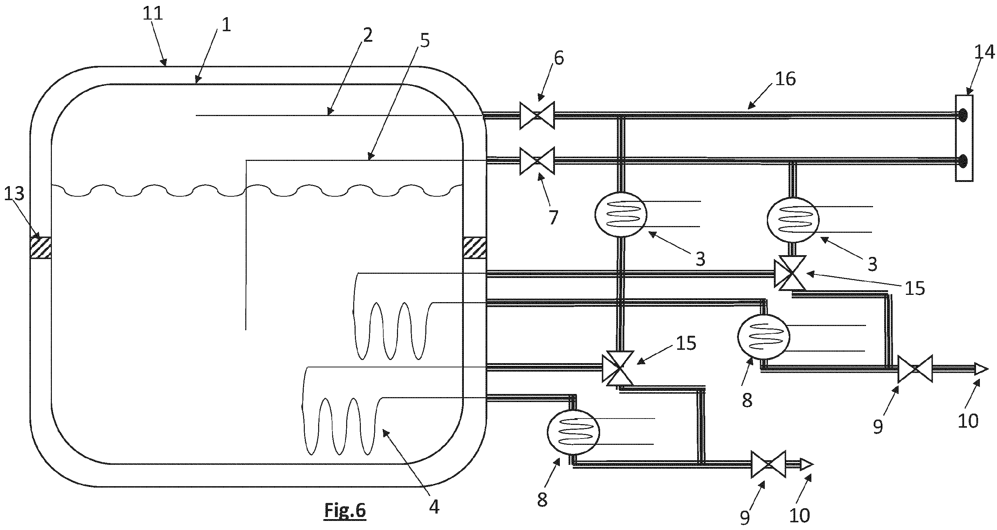

Wie bereits erwähnt, kann man den gesamten Entnahmestrom durch den Innentank-Wärmeübertrager 4 leiten (siehe Fig. 1, Fig. 2 und Fig. 3). Dies kann aber in manchen Anwendungsfällen unerwünscht sein, wodurch ein weiteres Bauteil notwendig sein kann, nämlich ein Teilstromregelventil 15 (Flow Control Valve). Dies dient beispielsweise dazu, einen prozentuell geregelten Massenstrom über den Innentankwärmeübertrager 4 zu leiten, wodurch ein kontrollierter und damit stabilisierter Arbeitsbereich eingestellt werden kann (siehe Fig. 4, Fig. 5 und Fig. 6).

Um für mobile Anwendungen eine Entnahme des Mediums auch bei Einzelfehlern sicherstellen zu können, wird erfindungsgemäß eine Redundanz in das Speichersystem eingebracht. Eine Verdoppelung der kryogenen Ventile, also des ersten und zweiten steuerbaren Leitungs-Absperrventils 6 und 7 ist dabei jedoch nicht notwendig. Durch diese Maßnahme kann ein System realisiert werden welches Ausfälle von einzelnen Komponenten kompensieren kann und daher auch den Verlust der Funktionalität des Speichersystems verhindern kann. Dabei gibt es zwei Entnahmestränge, die sich in der Art der Entnahme (Gas, Flüssig) unterscheiden können. Durch die redundante Ausführung mit zwei nicht miteinander verbundenen Entnahmesträngen kann bei Ausfall oder Undichtheit einer Komponente in einem Entnahmestrang, der jeweils andere die volle Funktionsfähigkeit des anderen übernehmen. Insbesondere in der Luftfahrt, Schifffahrt und im Automotiven Sektor ist ein solches Szenario, bei dem ein einzelner Ausfall oder ein einziger Fehler zur Abschaltung des gesamten Tanksystems führt, nicht wünschenswert. Ein weiterer Vorteil ist, dass trotz redundanter Ausführung nicht wesentlich mehr Komponenten benötigt werden.

Ein Entnahmestrang kann für die Entnahme von flüssigem kryogenem Medium vorgesehen und dementsprechend ausgelegt sein. Der zweite Strang kann die Möglichkeit der Entnahme vom gasförmigen Medium darstellen. Dadurch kann das Speichersystem, trotz neuer Art der Verrohrung, die Möglichkeit umfassen zwischen der Art der Entnahme zu wechseln, wie es für eine bessere Performance des Tanksystems wünschenswert sein kann.

Um im Fall eines einzelnen Fehlers den Fehler zu erkennen und den Wechsel der Entnahmeart zu ermöglichen, können verschiedene Methoden zur Überwachung des Systems realisiert werden:
Eine Methode beinhaltet das Verbauen der Komponenten (alle Komponente die für die Entnahme notwendig sind, im Anschluss an die kryogenen Ventile) in einen erweiterten Vakuumbereich (Sekundärvakuum) 12, beispielsweise stirnseitig oder entlang der Tankachse (Fig. 7 - 10). Dadurch sind Leckagen nach außen schnell erkennbar und ein Wechsel der Entnahmevariante kann realisiert werden, ehe das System einen Ausfall erleidet. Hierbei ist als weitere Variante von Vorteil, wenn für den ersten und zweiten Entnahmestrang jeweils ein separater sekundärer Vakuumbereich 12 eingerichtet ist. Es sei auch hier angemerkt, dass anstelle des sekundären Vakuums auch eine Inertgasatmosphäre (zB. Helium, Stickstoff, Argon) im Raum 12 hergestellt werden kann.

Beispielsweise wenn man diesen Bauraum nicht nutzen kann, können, in einer zweiten Methode, die Entnahmeleitungen mittels vakuum-isolierten Rohrleitungen 16 überwacht werden, um gegebenenfalls Ausfälle und Leckagen zu erkennen.

Die Komponenten für das Nebensystem müssen dementsprechend unterschiedlich ausgelegt werden bzw. werden jeweils für ein Worst-Case Szenario eingebaut für beide Entnahmestränge. Wenn notwendig, bedeutet dies ebenso, dass das Speichersystem zwei Druckaufbausysteme verbaut haben kann, da jeder Entnahmestrang für sich die Möglichkeit haben sollte, den Druck des Tanks zu regulieren, da auch diese Komponente einen Fehler aufweisen könnte.

### Bezugszeichenliste

- 1: Speicherbehälter
- 2: Gasentnahmeleitung
- 3: erster Wärmetauscher
- 4: erster Innentank-Wärmetauscher
- 5: Flüssigentnahmeleitung
- 6: erstes steuerbares Leitungs-Absperrventil
- 7: zweites steuerbares Leitungs-Absperrventil
- 8: zweiter Wärmetauscher
- 9: drittes steuerbares Leitungs-Absperrventil
- 10: Verbraucheranschluss
- 11: Außenbehälter
- 12: sekundärer Vakuumraum/ Raum für Inertgasatmosphäre
- 13: Aufhängung
- 14: Betankungsvorrichtung
- 15: Teilstromregelventil
- 16: Vakuum-isolierte Leitung

## Patentansprüche

1. Speichersystem zur Speicherung eines kryogenen Mediums, insbesondere zur Speicherung von Wasserstoff, umfassend einen Speicherbehälter (1) zur Aufnahme des Mediums, wobei ein erster Entnahmestrang eine fluidleitende Verbindung vom Innenraum des Speicherbehälters (1) bis zu einem Verbraucheranschluss (10), zum Anschluss eines Verbrauchers, bildet, wobei in dem ersten Entnahmestrang zumindest ein erstes steuerbares Leitungs-Absperrventil (6) und ein erster Wärmetauscher (3) angeordnet ist,
wobei ein vom ersten Entnahmestrang verschiedener zweiter Entnahmestrang eine fluidleitende Verbindung vom Innenraum des Speicherbehälters (1) bis zu einem Verbraucheranschluss (10), zum Anschluss des selben Verbrauchers, bildet, wobei in dem zweiten Entnahmestrang zumindest ein zweites steuerbares Leitungs-Absperrventil (7) und ein weiterer erster Wärmetauscher (3) angeordnet ist, **dadurch gekennzeichnet , dass** der erste Entnahmestrang zusätzlich einen Innentank-Wärmetauscher (4) nach dem erster Wärmetauscher (3) aufweist und der zweite Entnahmestrang zusätzlich einen weiteren Innentank-Wärmetauscher (4) nach dem weiteren ersten Wärmetauscher (3) aufweist.

2. Speichersystem nach Anspruch 1,
**dadurch gekennzeichnet , dass** der Verbraucheranschluss (10) des ersten Entnahmestrangs und der Verbraucheranschluss (10) des zweiten Entnahmestrangs zu einem gemeinsamen Anschluss zusammengeführt sind oder nicht zu einem gemeinsamen Anschluss zusammengeführt sind.

3. Speichersystem nach einem der zuvor genannten Ansprüche,
**dadurch gekennzeichnet , dass** der erste Entnahmestrang zusätzlich ein drittes steuerbares Leitungs-Absperrventil (9) unmittelbar vor dem Verbraucheranschluss (10) aufweist und der zweite Entnahmestrang zusätzlich ein weiteres drittes steuerbares Leitungs-Absperrventil (9) unmittelbar vor dem Verbraucheranschluss (10) aufweist.

4. Speichersystem nach einem der zuvor genannten Ansprüche,
**dadurch gekennzeichnet , dass** der erste Entnahmestrang zusätzlich einen zweiten Wärmetauscher (8) nach dem Innentank-Wärmetauscher (4) aufweist und der zweite Entnahmestrang zusätzlich einen weiteren zweiten Wärmetauscher (8) nach dem weiteren Innentank-Wärmetauscher (4) aufweist.

5. Speichersystem nach einem der zuvor genannten Ansprüche,
**dadurch gekennzeichnet , dass** der erste Entnahmestrang zusätzlich ein Teilstromregelventil (15) nach dem ersten steuerbaren Leitungs-Absperrventil (6) und vor dem Innentank-Wärmetauscher (4) aufweist und der zweite Entnahmestrang zusätzlich einen ein weiteres Teilstromregelventil (15) nach dem zweiten steuerbaren Leitungs-Absperrventil (7) und vor dem weiteren Innentank-Wärmetauscher (4) aufweist.

6. Speichersystem nach einem der zuvor genannten Ansprüche,
**dadurch gekennzeichnet, dass** alle Komponenten des ersten Entnahmestrangs bis zum Verbraucheranschluss (10), wie Leitungen, Wärmetauscher und Ventile, redundant auch im zweiten Entnahmestrang vorhanden und in der selben Reihenfolge angeordnet sind.

7. Speichersystem nach einem der zuvor genannten Ansprüche,
**dadurch gekennzeichnet , dass** der Speicherbehälter (1) doppelwandig ausgebildet ist, mit einem isolierenden Vakuumraum zwischen den beiden Wänden des Speicherbehälters (1), wobei das erste und zweite steuerbare Leitungs-Absperrventil (6, 7) und/oder die ersten Wärmetauscher (3) des ersten und zweiten Entnahmestrangs im Vakuumraum angeordnet sind, bevorzugt auch die zweiten Wärmetauscher (8) des ersten und zweiten Entnahmestrangs.

8. Speichersystem nach einem der zuvor genannten Ansprüche,
**dadurch gekennzeichnet , dass** der Speicherbehälter (1) doppelwandig ausgebildet ist, mit einem isolierenden Vakuumraum zwischen den beiden Wänden des Speicherbehälters (1), wobei das erste und zweite steuerbare Leitungs-Absperrventil (6, 7) und/oder die ersten Wärmetauscher (3) des ersten und zweiten Entnahmestrangs außerhalb eines Außenbehälters (11) des Speicherbehälters (1) angeordnet sind, wobei zumindest Teile von Leitungen außerhalb des Außenbehälters (11) des Speicherbehälters (1) als vakuum-isolierte Leitungen (16) ausgebildet sind.

9. Speichersystem nach einem der zuvor genannten Ansprüche,
**dadurch gekennzeichnet , dass** der Speicherbehälter (1) zumindest einen sekundären Vakuumraum oder Raum mit Inertgasatmosphäre (12) umfasst, wobei das erste und zweite steuerbare Leitungs-Absperrventil (6, 7) und/oder die ersten Wärmetauscher (3) des ersten und zweiten Entnahmestrangs im sekundären Vakuumraum oder Raum mit Inertgasatmosphäre (12) angeordnet sind, wobei bevorzugt die Komponenten für den ersten und zweiten Entnahmestrang jeweils in einem separaten sekundären Vakuumbereich oder Raum mit Inertgasatmosphäre (12) des ersten bzw. zweiten Entnahmestrangs angeordnet sind.

10. Vorrichtung umfassend ein Speichersystem nach einem der zuvor genannten Ansprüche und einen Verbraucher für das im Speicherbehälter aufgenommene Medium,
**dadurch gekennzeichnet , dass** der Verbraucheranschluss (10) des ersten Entnahmestrangs und der Verbraucheranschluss (10) des zweiten Entnahmestrangs an den Verbraucher angeschlossen ist, wobei der Verbraucheranschluss (10) des ersten Entnahmestrangs und der Verbraucheranschluss (10) des zweiten Entnahmestrangs zu einem gemeinsamen Anschluss am Verbraucher zusammengeführt sind oder nicht zu einem gemeinsamen Anschluss am Verbraucher zusammengeführt sind.

## Claims

1. Storage system for storing a cryogenic medium, in particular for storing hydrogen, comprising a storage container (1) for receiving the medium, wherein a first removal line forms a fluid-conducting connection from the interior of the storage container (1) to a consumer connection (10), for connecting a consumer, wherein at least a first controllable line shut-off valve (6) and a first heat exchanger (3) are arranged in the first removal line,
wherein a second removal line which is different from the first removal line forms a fluid-conducting connection from the interior of the storage container (1) to a consumer connection (10) for connecting the same consumer, wherein at least a second controllable line shut-off valve (7) and a further first heat exchanger (3) are arranged in the second removal line **characterized in that** the first removal line additionally has an internal tank heat exchanger (4) downstream of the first heat exchanger (3) and the second removal line additionally has a further internal tank heat exchanger (4) downstream of the further first heat exchanger (3).

2. Storage system according to Claim 1, **characterized in that** the consumer connection (10) of the first removal line and the consumer connection (10) of the second removal line are combined together to form a common connection or are not combined together to form a common connection.

3. Storage system according to one of the aforementioned claims,
**characterized in that** the first removal line additionally has a third controllable line shut-off valve (9) directly upstream of the consumer connection (10), and the second removal line additionally has a further third controllable line shut-off valve (9) directly upstream of the consumer connection (10).

4. Storage system according to one of the aforementioned claims ,
**characterized in that** the first removal line additionally has a second heat exchanger (8) downstream of the internal tank heat exchanger (4) and the second removal line additionally has a further second heat exchanger (8) downstream of the further internal tank heat exchanger (4).

5. Storage system according to one of the aforementioned claims ,
**characterized in that** the first removal line additionally has a flow control valve (15) downstream of the first controllable line shut-off valve (6) and upstream of the internal tank heat exchanger (4), and the second removal line additionally has a further flow control valve (15) downstream of the second controllable line shut-off valve (7) and upstream of the further internal tank heat exchanger (4).

6. Storage system according to one of the aforementioned claims,
**characterized in that** all of the components of the first removal line as far as the consumer connection (10), such as lines, heat exchangers and valves, are also present as redundant components in the second removal line and are arranged in the same sequence.

7. Storage system according to one of the aforementioned claims,
**characterized in that** the storage container (1) is configured to be double-walled with an insulating vacuum space between the two walls of the storage container (1), wherein the first and the second controllable line shut-off valve (6, 7) and/or the first heat exchangers (3) of the first and second removal line, preferably also the second heat exchangers (8) of the first and second removal line, are arranged in the vacuum space.

8. Storage system according to one of the aforementioned claims,
**characterized in that** the storage container (1) is configured to be double-walled with an insulating vacuum space between the two walls of the storage container (1), wherein the first and the second controllable line shut-off valve (6, 7) and/or the first heat exchangers (3) of the first and second removal line are arranged outside an external container (11) of the storage container (1), wherein at least parts of the lines are configured outside the external container (11) of the storage container (1) as vacuum-insulated lines (16).

9. Storage system according to one of the aforementioned claims,
**characterized in that** the storage container (1) comprises at least one secondary vacuum space or space with an inert gas atmosphere (12), wherein the first and second controllable line shut-off valve (6, 7) and/or the first heat exchangers (3) of the first and second removal line are arranged in the secondary vacuum space or space with an inert gas atmosphere (12), wherein preferably the components for the first and second removal line are arranged in each case in a separate secondary vacuum region or space with an inert gas atmosphere (12) of the first or second removal line.

10. Device comprising a storage system according to one of the aforementioned claims, and a consumer for the medium received in the storage container, **characterized in that** the consumer connection (10) of the first removal line and the consumer connection (10) of the second removal line are connected to the consumer, wherein the consumer connection (10) of the first removal line and the consumer connection (10) of the second removal line are combined together to form a common connection to the consumer, or are not combined together to form a common connection to the consumer.

## Revendications

1. Système de stockage pour le stockage d'un milieu cryogénique, notamment pour le stockage d'hydrogène, comprenant un contenant de stockage (1) pour recevoir le milieu, une première ligne de prélèvement formant une liaison de conduction de fluide depuis l'espace intérieur du contenant de stockage (1) jusqu'à un raccord de consommateur (10), pour le raccordement d'un consommateur, au moins une première soupape d'arrêt de conduite commandable (6) et un premier échangeur de chaleur (3) étant agencés dans la première ligne de prélèvement,
une deuxième ligne de prélèvement différente de la première ligne de prélèvement formant une liaison de conduction de fluide depuis l'espace intérieur du contenant de stockage (1) jusqu'à un raccord de consommateur (10), pour le raccordement du même consommateur, au moins une deuxième soupape d'arrêt de conduite commandable (7) et un autre premier échangeur de chaleur (3) étant agencés dans la deuxième ligne de prélèvement, **caractérisé en ce que** la première ligne de prélèvement présente en outre un échangeur de chaleur de réservoir intérieur (4) après le premier échangeur de chaleur (3) et la deuxième ligne de prélèvement présente en outre un autre échangeur de chaleur de réservoir intérieur (4) après l'autre premier échangeur de chaleur (3) .

2. Système de stockage selon la revendication 1, **caractérisé en ce que** le raccord de consommateur (10) de la première ligne de prélèvement et le raccord de consommateur (10) de la deuxième ligne de prélèvement sont réunis en un raccord commun ou ne sont pas réunis en un raccord commun.

3. Système de stockage selon l'une quelconque des revendications précédentes,
**caractérisé en ce que** la première ligne de prélèvement présente en outre une troisième soupape d'arrêt de conduite commandable (9) directement avant le raccord de consommateur (10) et la deuxième ligne de prélèvement présente en outre une autre troisième soupape d'arrêt de conduite commandable (9) directement avant le raccord de consommateur (10).

4. Système de stockage selon l'une quelconque des revendications précédentes,
**caractérisé en ce que** la première ligne de prélèvement présente en outre un deuxième échangeur de chaleur (8) après l'échangeur de chaleur de réservoir intérieur (4) et la deuxième ligne de prélèvement présente en outre un autre deuxième échangeur de chaleur (8) après l'autre échangeur de chaleur de réservoir intérieur (4).

5. Système de stockage selon l'une quelconque des revendications précédentes,
**caractérisé en ce que** la première ligne de prélèvement présente en outre une soupape de régulation de courant partiel (15) après la première soupape d'arrêt de conduite commandable (6) et avant l'échangeur de chaleur de réservoir intérieur (4) et la deuxième ligne de prélèvement présente en outre une autre soupape de régulation de courant partiel (15) après la deuxième soupape d'arrêt de conduite commandable (7) et avant l'autre échangeur de chaleur de réservoir intérieur (4).

6. Système de stockage selon l'une quelconque des revendications précédentes,
**caractérisé en ce que** tous les composants de la première ligne de prélèvement jusqu'au raccord de consommateur (10), tels que les conduites, les échangeurs de chaleur et les soupapes, sont également présents de manière redondante dans la deuxième ligne de prélèvement et sont agencés dans le même ordre.

7. Système de stockage selon l'une quelconque des revendications précédentes,
**caractérisé en ce que** le contenant de stockage (1) est réalisé à double paroi, avec un espace sous vide isolant entre les deux parois du contenant de stockage (1), la première et la deuxième soupape d'arrêt de conduite commandable (6, 7) et/ou les premiers échangeurs de chaleur (3) des première et deuxième lignes de prélèvement étant agencés dans l'espace sous vide, de préférence également les deuxièmes échangeurs de chaleur (8) des première et deuxième lignes de prélèvement.

8. Système de stockage selon l'une quelconque des revendications précédentes,
**caractérisé en ce que** le contenant de stockage (1) est réalisé à double paroi, avec un espace sous vide isolant entre les deux parois du contenant de stockage (1), la première et la deuxième soupape d'arrêt de conduite commandable (6, 7) et/ou les premiers échangeurs de chaleur (3) des première et deuxième lignes de prélèvement étant agencés à l'extérieur d'un contenant extérieur (11) du contenant de stockage (1), au moins des parties de conduites à l'extérieur du contenant extérieur (11) du contenant de stockage (1) étant réalisées sous forme de conduites isolées sous vide (16).

9. Système de stockage selon l'une quelconque des revendications précédentes,
**caractérisé en ce que** le contenant de stockage (1) comprend au moins un espace sous vide secondaire ou un espace avec une atmosphère de gaz inerte (12), les première et deuxième soupapes d'arrêt de conduite commandables (6, 7) et/ou les premiers échangeurs de chaleur (3) des première et deuxième lignes de prélèvement étant agencés dans l'espace sous vide secondaire ou l'espace avec une atmosphère de gaz inerte (12), de préférence les composants pour les première et deuxième lignes de prélèvement étant chacun dans une zone sous vide secondaire ou un espace avec une atmosphère de gaz inerte (12) séparé(e) des première et deuxième lignes de prélèvement.

10. Dispositif comprenant un système de stockage selon l'une quelconque des revendications précédentes et un consommateur pour le milieu reçu dans le contenant de stockage,
**caractérisé en ce que** le raccord de consommateur (10) de la première ligne de prélèvement et le raccord de consommateur (10) de la deuxième ligne de prélèvement sont raccordés au consommateur, le raccord de consommateur (10) de la première ligne de prélèvement et le raccord de consommateur (10) de la deuxième ligne de prélèvement étant réunis en un raccord commun au consommateur ou n'étant pas réunis en un raccord commun au consommateur.
